# EUROPEAN PATENT APPLICATION

(11) **EP 4 632 846 A1**
(43) Date of publication of application: **15.10.2025**
(21) Application number: 23900598.6
(22) Date of filing: 04.12.2023
(51) Int. Cl.: H01M 4/62, H01M 4/139

(54) **BINDER COMPOSITION FOR ELECTRODE, PRODUCTION METHOD THEREFOR, AND COATING LIQUID COMPOSITION FOR ELECTRODE**

(30) Priority: 08.12.2022 JP 2022196642
(71) Applicant: DKS Co. Ltd., Kyoto-shi, Kyoto 600-8873 (JP)
(72) Inventor: SAKAMOTO, Koichi, kyoto-shi, Kyoto 600-8873 (JP); KANEKO, Fumiya, kyoto-shi, Kyoto 600-8873 (JP); NISHIKAWA, Akiyoshi, kyoto-shi, Kyoto 600-8873 (JP)
(74) Representative: TBK
(86) International application number: PCT/JP2023/043221
(87) International publication number: WO 2024/122483

(57) **Abstract**

A binder composition for an electrode and a method for producing the binder composition are provided. The binder composition can inhibit an increase in viscosity of a coating liquid for forming an electrode. A coating liquid composition for an electrode is also provided. The coating liquid composition includes the binder composition.

The present invention is a binder composition for an electrode, and the binder composition includes an aqueous dispersion of a polyurethane resin. The polyurethane resin has a D50 volume average particle size of 0.01 µm or greater and 0.05 µm or less and a D90 volume average particle size of 0.10 µm or greater and 0.15 µm or less.

## Description

### Technical Field

The present invention relates to a binder composition for an electrode, to a coating liquid composition for an electrode, to an electrode for a power storage device, to a power storage device, and to a method for producing a binder composition for an electrode.

### Background Art

Secondary batteries, which are typified by lithium secondary batteries, are drive power sources indispensable for various electronic devices, automobiles, and the like and are widely used in industries. Currently, research and development of secondary batteries are still being extensively conducted. Development efforts that are being actively made today include one for enhancing the performance of electrodes since the characteristics of a battery greatly depend on the types of the various materials that constitute the battery.

It is known that the electrode is formed, for example, by coating a coating liquid including an electrode active material, a binder for an electrode, a dispersing agent, and the like onto a current collector. While the characteristics of the electrode, particularly of the electrode for batteries, are determined by the electrode active material and the current collector, the binder is also an important factor that determines the characteristics of the electrode. From this standpoint, improving the characteristics of the binder is also considered to be important. For example, Patent Literature 1 discloses a technology for imparting excellent cycle characteristics and rate characteristics to a power storage device by using an electrode in which a urethane-resin-containing binder composition for an electrode is used.

### Citation List

### Patent Literature

PTL 1: Japanese Unexamined Patent Application Publication No. 2013-097906

### Summary of Invention

### Technical Problem

Unfortunately, in instances where an electrode is to be formed by using a urethane-resin-containing binder for an electrode of the related art, a problem arises in that if a solids concentration of the coating liquid used for forming the electrode is increased, the viscosity of the coating liquid increases, which results in a decrease in dispersibility and a decrease in operability.

The present invention has been made in view of what is stated above, and objects of the present invention are to provide a binder composition for an electrode, the binder composition being able to inhibit an increase in viscosity of a coating liquid for forming an electrode even if a solids concentration of the coating liquid is increased, to provide a method for producing the binder composition for an electrode, and to provide a coating liquid composition for an electrode, the coating liquid composition including the binder composition. Other objects of the present invention are to provide an electrode for a power storage device formed with the coating liquid composition for an electrode and to provide a power storage device.

### Solution to Problem

The present inventors diligently conducted studies to achieve the objects and, consequently, discovered that the objects can be achieved by using a polyurethane resin having a specific particle size distribution. Accordingly, the present invention was completed.

Specifically, the present invention encompasses, for example, the features described in the following items.
Item 1 A binder composition for an electrode, the binder composition comprising an aqueous dispersion of a polyurethane resin, wherein
   the polyurethane resin has a D50 volume average particle size of 0.01 µm or greater and 0.05 µm or less and a D90 volume average particle size of 0.10 µm or greater and 0.15 µm or less.
Item 2 The binder composition for an electrode according to Item 1, further comprising a carbon nanotube.
Item 3 The binder composition for an electrode according to Item 2, further comprising carboxymethyl cellulose or a salt thereof.
Item 4 A coating liquid composition for an electrode, the coating liquid composition comprising the binder composition for an electrode according to any one of Items 1 to 3.
Item 5 An electrode for a power storage device, the electrode comprising solids of the coating liquid composition for an electrode according to Item 4.
Item 6 A power storage device comprising the electrode for a power storage device according to Item 5.
Item 7-1 A method for producing a binder composition for an electrode, the binder composition comprising an aqueous dispersion of a polyurethane resin, the method comprising a step of preparing an aqueous dispersion of a polyurethane resin having a D50 volume average particle size of 0.01 µm or greater and 0.05 µm or less and a D90 volume average particle size of 0.10 µm or greater and 0.15 µm or less.
Item 7-2 A method for producing the binder composition for an electrode according to any one of Items 1 to 3, the method comprising a step of preparing the aqueous dispersion of the polyurethane resin having a D50 volume average particle size of 0.01 µm or greater and 0.05 µm or less and a D90 volume average particle size of 0.10 µm or greater and 0.15 µm or less.

### Advantageous Effects of Invention

In instances where the binder composition for an electrode of the present invention is used, an increase in viscosity of a coating liquid for forming an electrode can be inhibited even if a solids concentration of the coating liquid is increased. Accordingly, the binder composition for an electrode of the present invention is suitable for the preparation of an electrode-forming coating liquid having a high solids concentration.

### Description of Embodiments

Embodiments of the present invention will be described in detail below. In the present specification, the terms "comprise", "include", and "contain" encompass the concepts of "comprise", "include", "contain", "consist essentially of", and "consist of".

### 1. Binder Composition for Electrode

A binder composition for an electrode of the present invention is encompassed. The binder composition for an electrode includes an aqueous dispersion of a polyurethane resin, and the polyurethane resin has a D50 volume average particle size of 0.01 µm or greater and 0.05 µm or less and a D90 volume average particle size of 0.10 µm or greater and 0.15 µm or less. That is, the binder composition for an electrode of the present invention includes an aqueous dispersion containing a polyurethane resin that has a specific particle size distribution.

Because of the inclusion of such a polyurethane resin in the binder composition for an electrode of the present invention, in instances where the binder composition for an electrode of the present invention is used in a coating liquid for forming an electrode, an increase in viscosity of the coating liquid can be inhibited. Notably, even if a solids concentration of the coating liquid is high, the increase in viscosity can be inhibited. Accordingly, the binder composition for an electrode of the present invention is suitable for the preparation of a coating liquid having a high solids concentration and is, therefore, suitable as a binder component (binding agent) of a coating liquid composition for an electrode that is used to produce an electrode for a power storage device.

As referred to herein, the "coating liquid" refers to a coating liquid that contains an electrode active material, a binder for an electrode, a dispersing agent, and the like and which is used to form an electrode. In particular, the "coating liquid" refers to a coating liquid composition for an electrode of the present invention, which will be described later.

### (Aqueous Dispersion of Polyurethane Resin)

The aqueous dispersion of a polyurethane resin is one in which the polyurethane resin is dispersed in an aqueous medium. The polyurethane resin that is included in the aqueous dispersion of a polyurethane resin may be of any type provided that the polyurethane resin has the particle size distribution mentioned above. Examples of the polyurethane resin include a wide variety of polyurethane resins known in the art.

For example, the polyurethane resin may be formed of a component (A) and a component (B), described below, and, if necessary, may include one or both of a component (C) and a component (D). In other words, the polyurethane resin is one that includes structural units based on the component (A) and structural units based on the component (B) and, if necessary, includes one or both of structural units based on the component (C) and structural units based on the component (D).
Component (A): a compound having two or more isocyanate groups
Component (B): a compound having two or more active hydrogen groups
Component (C): a compound having one or more active hydrogen groups and hydrophilic groups
Component (D): a chain extender

The component (A) (a compound having two or more isocyanate groups) may be any of a wide variety of isocyanate compounds known in the art, and examples thereof include bifunctional isocyanate compounds, such as aliphatic diisocyanates, cycloaliphatic diisocyanates, aromatic diisocyanates, and araliphatic diisocyanates.

Examples of the aliphatic diisocyanates include tetramethylene diisocyanate, dodecamethylene diisocyanate, hexamethylene diisocyanate, 2,2,4-trimethylhexamethylene diisocyanate, 2,4,4-trimethylhexamethylene diisocyanate, lysine diisocyanate, 2-methylpentane-1,5-diisocyanate, and 3-methylpentane-1,5-diisocyanate. Examples of the cycloaliphatic diisocyanates include isophorone diisocyanate, hydrogenated xylylene diisocyanate, 4,4'-dicyclohexylmethane diisocyanate, 1,4-cyclohexane diisocyanate, methylcyclohexylene diisocyanate, and 1,3-bis(isocyanatomethyl)cyclohexane. Examples of the aromatic diisocyanates include tolylene diisocyanate, 2,2'-diphenylmethane diisocyanate, 2,4'-diphenylmethane diisocyanate, 4,4'-diphenylmethane diisocyanate (MDI), 4,4'-dibenzyl diisocyanate, 1,5-naphthylene diisocyanate, xylylene diisocyanate, 1,3-phenylene diisocyanate, and 1,4-phenylene diisocyanate. Examples of the araliphatic diisocyanates include dialkyldiphenylmethane diisocyanate, tetraalkyldiphenylmethane diisocyanate, and α,α,α,α-tetramethylxylylene diisocyanate.

The component (A) may be an isocyanate compound having three or more isocyanate groups that is used in place of, or in combination with, a bifunctional isocyanate compound.

Preferably, the component (A) includes a bifunctional isocyanate compound in an amount of 80 mass% or greater, more preferably 90 mass% or greater, and even more preferably 95 mass% or greater. The component (A) may exclusively be a bifunctional isocyanate compound. The component (A) may be formed of a single compound or two or more compounds.

The component (A) can be produced by a method known in the art or may be a commercially available product.

The component (B) (a compound having two or more active hydrogen groups) may be a compound having two or more hydroxyl groups, two or more amino groups, or two or more mercapto groups, at the ends of the molecule or within the molecule. Specific examples thereof include compounds known in the art, such as polyethers, polyesters, polyetheresters, polycarbonates, polythioethers, polyacetals, polyolefins, polysiloxanes, fluoro compounds, and vegetable oil compounds. The component (B) need not have any carboxy group or any sulfonic acid group.

Preferably, the component (B) is a polyol compound, a compound having two or more hydroxyl groups, and/or the like. Examples of the compound having two or more hydroxyl groups include ethylene glycol, propylene glycol, propanediol, butanediol, pentanediol, 3-methyl-1,5-pentanediol, hexanediol, neopentyl glycol, diethylene glycol, triethylene glycol, tetraethylene glycol, polyethylene glycol, dipropylene glycol, tripropylene glycol, 1,4-cyclohexanedimethanol, bisphenol A, bisphenol F, bisphenol S, hydrogenated bisphenol A, dibromobisphenol A, 1,4-cyclohexanedimethanol, dihydroxyethyl terephthalate, and hydroquinone dihydroxyethyl ether.

Examples of the polyol compound include compounds known in the art, such as polycarbonate polyols, polycaprolactone polyols, polyester polyols, polythioether polyols, polyacetal polyols, polytetramethylene glycols, polybutadiene polyols, polyisoprene polyols, and polychloroprene polyols.

The polycarbonate polyol may be, for example and without limitation, any of a wide variety of polycarbonate polyols known in the art. Examples of the polycarbonate polyol include carbonate polyols of 1,6-hexanediol, carbonate polyols of 1,4-butanediol and 1,6-hexanediol, carbonate polyols of 1,5-pentanediol and 1,6-hexanediol, and carbonate polyols of 3-methyl-1,5-pentanediol and 1,6-hexanediol.

It is also preferable that the component (B) include a compound having three or more active hydrogen groups reactive with an isocyanate group so that a branched structure can be introduced into the polyurethane resin. Specific examples of such a compound include polyhydric alcohols, such as trimethylolpropane, glycerin, and pentaerythritol, and oxyalkylene derivatives thereof.

The component (B) may include a single-chain low-molecular-weight diol, such as ethylene glycol, 1,4-butanediol, or 1,4-cyclohexanedimethanol, so that the urethane linkage can be localized within the polyurethane.

The component (B) can be produced by a method known in the art or may be a commercially available product.

The component (C) (a compound having one or more active hydrogen groups and hydrophilic groups) is a compound different from the component (A) and the component (B). For example, the component (C) is not a polyol compound.

In the component (C), the hydrophilic group may be any of an anionic hydrophilic group, a cationic hydrophilic group, and a nonionic hydrophilic group. Examples of the anionic hydrophilic group include carboxyl groups, salts thereof, sulfonic acid groups, and salts thereof. Examples of the cationic hydrophilic groups include tertiary ammonium salts and quaternary ammonium salts. Examples of the nonionic hydrophilic groups include groups made of ethylene oxide repeating units and groups made of ethylene oxide repeating units and other alkylene oxide repeating units.

Specific examples of the component (C) include compounds containing one or more active hydrogen groups and one or more carboxy groups (or salts thereof), compounds having one or more active hydrogen groups and one or more sulfonic acid groups (or salts thereof), compounds having one or more active hydrogen groups and a tertiary ammonium salt, compounds having one or more active hydrogen groups and a quaternary ammonium salt, and compounds having one or more active hydrogen groups and one or more nonionic hydrophilic groups.

Examples of the compounds containing one or more active hydrogen groups and one or more carboxy groups (or salts thereof) include carboxylic acid-containing compounds, such as 2,2-dimethylolpropionic acid, 2,2-dimethylolbutyric acid, 2,2-dimethylolvaleric acid, dioxymaleic acid, 2,6-dioxybenzoic acid, and 3,4-diaminobenzoic acid, derivatives thereof, and salts thereof and also include polyester polyols that can be prepared with a carboxylic acid-containing compound. Other examples of the compounds containing one or more active hydrogen groups and one or more carboxy groups (or salts thereof) include amino acids, such as alanine, aminobutyric acid, aminocaproic acid, glycine, glutamic acid, aspartic acid, and histidine, and carboxylic acids, such as succinic acid, adipic acid, maleic anhydride, phthalic acid, and trimellitic anhydride.

Examples of the compounds having one or more active hydrogen groups and one or more sulfonic acid groups (or salts thereof) include sulfonic-acid-containing compounds, such as 2-oxyethanesulfonic acid, phenolsulfonic acid, sulfobenzoic acid, sulfosuccinic acid, 5-sulfoisophthalic acid, sulfanilic acid, 1,3-phenylene-diamine-4,6-disulfonic acid, and 2,4-diaminotoluene-5-sulfonic acid, and derivatives thereof, and also include polyester polyols, polyamide polyols, and polyamide polyester polyols that can be obtained by copolymerizing two or more of the foregoing sulfonic-acid-containing compounds.

The compound containing one or more active hydrogen groups and one or more carboxy groups (or salts thereof) and the compound having one or more active hydrogen groups and one or more sulfonic acid groups (or salts thereof) may each be a salt resulting from the neutralization of the carboxy group or the sulfonic acid group by a neutralizing agent. In this case, the polyurethane resin has good dispersibility in water. Examples of the neutralizing agent include non-volatile bases, such as sodium hydroxide and potassium hydroxide, tertiary amines, such as trimethylamine, triethylamine, dimethylethanolamine, methyldiethanolamine, and triethanolamine, and volatile bases, such as ammonia.

Examples of the compounds having one or more active hydrogen groups and a tertiary ammonium salt include alkanolamines, such as methylaminoethanol and methyldiethanolamine. The tertiary ammonium salt may be a salt resulting from the neutralization by a neutralizing agent. In this case, the polyurethane resin has good dispersibility in water. Examples of the neutralizing agent include organic carboxylic acids, such as formic acid and acetic acid and also include hydrochloric acid and sulfuric acid. From the standpoint of ease of emulsification, it is preferable that the compounds having one or more active hydrogen groups and a tertiary ammonium salt be compounds resulting from the neutralization of methyldiethanolamine by an organic carboxylic acid. The neutralization may be performed at any of the stages: a stage before the formation of the urethane resin, a stage during the formation, and a stage after the formation.

Examples of the compounds having one or more active hydrogen groups and a quaternary ammonium salt include compounds resulting from the quaternization of an alkanolamine, such as methylaminoethanol or methyldiethanolamine, by an alkyl halide, such as methyl chloride or methyl bromide, or a dialkyl sulfuric acid, such as dimethyl sulfate. From the standpoint of ease of emulsification, it is preferable that the compounds having one or more active hydrogen groups and a quaternary ammonium salt be compounds resulting from the quaternization of methyldiethanolamine by dimethyl sulfate or the like.

The compounds having one or more active hydrogen groups and one or more nonionic hydrophilic groups are, preferably, without limitation, compounds containing ethylene oxide repeating units in an amount of at least 30 mass% or greater and having a number average molecular weight of 300 to 20000. Examples of such a compound include nonionic-group-containing compounds, such as polyoxyethylene glycol, polyoxyethylene-polyoxypropylene copolymer glycol, polyoxyethylene-polyoxybutylene copolymer glycol, polyoxyethylene-polyoxyalkylene copolymer glycol, and monoalkyl ethers thereof and also include polyester polyether polyols that can be obtained by copolymerizing any of the foregoing compounds.

Preferably, the component (C) is a compound containing one or more active hydrogen groups and one or more carboxyl groups. In this case, the binder composition for an electrode of the present invention is likely to have improved adhesion to a current collector.

When the component (C) is an anionic-hydrophilic-group-containing compound, it is preferable, in terms of a high likelihood of achieving excellent dispersibility, that the polyurethane resin have an acid number, which indicates an anionic hydrophilic group content, of 5 to 50 mgKOH/g. More preferably, the acid number is 5 to 45 mgKOH/g. The acid number can be determined by determining the number of milligrams of KOH necessary to neutralize free carboxyl groups present in 1 g of solids of the aqueous dispersion of the polyurethane resin, in accordance with JIS K 0070-1992. When the component (C) is a nonionic-group-containing compound, it is preferable that a content of the nonionic-group-containing compound be 1 to 30 parts by mass per 100 parts by mass of the polyurethane resin; the content is more preferably 3 to 25 parts by mass and even more preferably 5 to 20 parts by mass.

The component (C) can be produced by a method known in the art or may be a commercially available product.

The component (D) may be, for example, any of a wide variety of chain extenders that are used in the production of urethane resins. Specific examples of the component (D) include diamine compounds and polyamine compounds. Examples of the diamine compounds include ethylenediamine, trimethylenediamine, piperazine, isophoronediamine, and amino-group-containing silane coupling agents. Examples of the polyamine compounds include diethylenetriamine, dipropylenetriamine, and triethylenetetramine. It is also preferable that the component (D) include a tri- or higher functional polyamine so that an internal cross-linked structure of a polyurethane can be introduced to improve resistance to electrolytes.

In the polyurethane resin, a content ratio of structural units based on the component (D) (chain extender) may be, for example, 0.1 parts by mass or greater and 3 parts by mass or less per 100 parts by mass of the polyurethane resin; the content ratio is preferably 0.2 parts by mass or greater and 1 part by mass or less.

The polyurethane resin may be formed of only the structural units based on the component (A), the structural units based on the component (B), the structural units based on the component (C), and the structural units based on the component (D) or may include other structural units as long as the effects of the present invention are not impaired. The content ratios of the structural units based on the component (A), the structural units based on the component (B), the structural units based on the component (C), and the structural units based on the component (D), which are included in the polyurethane resin, may be, for example and without limitation, similar to those of a polyurethane resin known in the art.

The polyurethane resin may have an amount of urethane linkages of 300 to 20000 g/eq, which is preferable in terms of a low likelihood of a decrease in flexibility and a high likelihood of achieving excellent binding properties; more preferably, the amount of urethane linkages is 400 to 10000 g/eq.

The polyurethane resin may have a number average molecular weight of, for example and without limitation, 50000 or greater and 1000000 or less; this may be selected in view of facilitating the formation of a coating film. Furthermore, the polyurethane resin preferably may have a crosslink density of, for example and without limitation, 0.01 to 0.50 per 1000 molecular weight of the polyurethane resin. The crosslink density of the polyurethane resin can be measured by a method known in the art.

As stated above, the polyurethane resin has a D50 volume average particle size of 0.01 µm or greater and 0.05 µm or less and a D90 volume average particle size of 0.10 µm or greater and 0.15 µm or less. This particle size distribution of the polyurethane resin enables the binder composition for an electrode, which includes the aqueous dispersion of the polyurethane resin, to inhibit an increase in viscosity of a coating liquid for forming an electrode, and, consequently, the viscosity of the coating liquid is unlikely to increase even if the solids concentration of the coating liquid is high. Accordingly, the binder composition for an electrode including the aqueous dispersion of the polyurethane resin is suitable for the preparation of a coating liquid having a high solids concentration and is, therefore, suitable as a binder component (binding agent) of a coating liquid composition for an electrode that is used to produce an electrode for a power storage device.

As referred to herein, the "D50 volume average particle size" means a particle size at a point at which a cumulative volume distribution is 50% in a particle size distribution curve of the polyurethane resin, and the "D90 volume average particle size" means a particle size at a point at which the cumulative volume distribution is 90% in the particle size distribution curve of the polyurethane resin. The D50 volume average particle size and the D90 volume average particle size (hereinafter simply referred to as "D50" and "D90", respectively) of the polyurethane resin are values measured with a dynamic light scattering (DLS) particle size distribution analyzer (Nanotrac WaveII (manufactured by MicrotracBEL).

If the D50 of the polyurethane resin in the aqueous dispersion of the polyurethane resin is less than 0.01 µm, a very complex method needs to be used to synthesize the aqueous dispersion of the polyurethane resin, or the synthesis is difficult. If the D50 of the polyurethane resin in the aqueous dispersion of the polyurethane resin is greater than 0.05 µm, the inhibition of an increase in viscosity of a coating liquid is difficult, and as a result, it is difficult to increase the solids concentration of the coating liquid. The D50 of the polyurethane resin in the aqueous dispersion of the polyurethane resin is preferably 0.015 µm or greater and more preferably 0.02 µm or greater.

If the D90 of the polyurethane resin in the aqueous dispersion of the polyurethane resin is less than 0.10 µm, the inhibition of an increase in viscosity of a coating liquid is difficult, and as a result, it is difficult to increase the solids concentration of the coating liquid. If the D90 of the polyurethane resin in the aqueous dispersion of the polyurethane resin is greater than 0.15 µm, the inhibition of an increase in viscosity of a coating liquid is difficult, and as a result, it is difficult to increase the solids concentration of the coating liquid. Preferably, the D90 of the polyurethane resin in the aqueous dispersion of the polyurethane resin is 0.11 µm or greater.

The adjustment of the D50 and the D90 of the polyurethane resin in the aqueous dispersion of the polyurethane resin may be carried out by any method. For example, the method may be any of a wide variety of methods for controlling the particle size distribution of an aqueous dispersion of a polyurethane resin. Specifically, it is preferable that the adjustment of the D50 and the D90 of the polyurethane resin be carried out by controlling the conditions for emulsification and dispersion for the production of the aqueous dispersion of the polyurethane resin, as will be described below. Additionally or alternatively, the D50 and D90 of the polyurethane resin can also be adjusted, for example, by the amount of use of the raw materials (the component (A), the component (B), the component (C), the component (D), and the chain extender) and the like used for the production of the polyurethane resin or by the proportion of the water used.

In the aqueous dispersion of the polyurethane resin, the dispersion medium serving as a medium may be of any type, examples of which include water, lower alcohols having 1 to 3 carbon atoms, and solvents containing a mixture thereof. In particular, from the standpoint of providing excellent dispersibility of the polyurethane resin, it is preferable that the dispersion medium be water.

The aqueous dispersion of the polyurethane resin may have any solids concentration. From the standpoint of, for example, operability, it is preferable that the solids concentration of the aqueous dispersion of the polyurethane resin be 1 mass% or greater and 60 mass% or less. The solids concentration is more preferably 3 mass% or greater and 55 mass% or less and even more preferably 4 mass% or greater and 50 mass% or less.

### (Method for Producing Aqueous Dispersion of Polyurethane Resin)

The aqueous dispersion of the polyurethane resin may be produced by any method. For example, the method may be similar to methods for producing an aqueous dispersion of a polyurethane resin that are known in the art. For example, the aqueous dispersion of the polyurethane resin can be obtained by performing a mixing process on the component (A) and the component (B) and, if necessary, on the component (C), to prepare a urethane prepolymer and then emulsifying and dispersing the urethane prepolymer. The mixing process may be carried out in a solvent, if necessary. Preferably, the solvent has the properties of being inert to isocyanate groups and being able to dissolve the resulting urethane prepolymer. Examples of the solvent selected from this standpoint include dioxane, methyl ethyl ketone, dimethylformamide, tetrahydrofuran, N-methyl-2-pyrrolidone, acetone, toluene, ethyl acetate, butyl acetate, and propylene glycol monomethyl ether acetate. It is preferable that the solvent used in the reaction be removed at the end.

The mixing process may be carried out at any temperature, which may be, for example, 30°C to 130°C. The mixing process may be carried out for a duration that is appropriately selected in accordance with the temperature. The duration may be, for example, 0.5 hours to 10 hours. The mixing process allows the reaction between the component (A) and the component (B) to proceed to form a urethane prepolymer. In the instance where a solvent is used for the mixing process, the resulting product is a urethane prepolymer solution. After the urethane prepolymer has been formed, neutralization of the anionic hydrophilic group of the component (C) or neutralization or quaternization of the cationic hydrophilic group thereof may be performed by a method known in the art if necessary, before the emulsification and dispersion.

In the mixing process, the component (A), the component (B), and the component (C) may be used in any amounts, and, for example, the amounts of use may be similar to those of a method known in the art. For example, the component (A) may be used such that an equivalent ratio of 1:0.85 to 1:1.1 can be achieved, where the equivalent ratio is a ratio of a total amount of the active hydrogen groups in the component (B), the component (C), and the component (D) that are reactive with isocyanate groups to the amount of isocyanate groups in the component (A). The component (A) may be used in stoichiometric excess.

The emulsification and dispersion of the urethane prepolymer prepared by the mixing process may be carried out by any method, which may be any of a wide variety of methods known in the art. For example, the urethane prepolymer can be emulsified and dispersed by mixing the solution of the urethane prepolymer with alkaline water and imparting shear to the mixture with an emulsification disperser, such as a homogenizer.

The alkaline water used for the emulsification and dispersion may be, for example, an aqueous solution of any of various alkaline components. In particular, it is preferable that the alkaline component be sodium hydroxide. That is, it is preferable that the alkaline water be an aqueous solution of sodium hydroxide. In this case, the D50 and D90 of the polyurethane resin can be readily adjusted to be within the desired ranges. The alkaline water may have a concentration of, for example, 0.5 to 1 mass%; this is preferable in terms of readily adjusting the D50 and D90 of the polyurethane resin to be within the desired ranges. The concentration is more preferably 0.6 to 0.9 mass% and even more preferably 0.65 to 0.85 mass%. After the solution of the urethane prepolymer has been mixed with alkaline water, and shear has been imparted by an emulsification disperser, such as a homogenizer, water may be further added.

The mixing of the solution of the urethane prepolymer with alkaline water may be carried out by any method, and the D50 and the D90 of the polyurethane resin can be appropriately adjusted to be within the desired ranges. For example, it is preferable that the mixing be carried out by adding alkaline water dropwise to the solution of the urethane prepolymer. The dropwise addition of the alkaline water may be carried out such that an amount of dropwise addition on an alkaline component basis (i.e., an amount of dropwise addition of the alkaline component per minute) is 0.55×10⁻² (parts by mass/min) or greater and 1×10⁻² (parts by mass/min) or less per 100 parts by mass of the urethane prepolymer; this is preferable in terms of readily adjusting the D50 and D90 of the polyurethane resin to be within the desired ranges. Regarding the dropwise addition of alkaline water, the amount of dropwise addition on an alkaline component basis is preferably 0.6×10⁻² (parts by mass/min) or greater, more preferably 0.65×10⁻² (parts by mass/min) or greater, and even more preferably 0.66×10⁻² (parts by mass/min) or greater and is preferably 0.95×10⁻² (parts by mass/min) or less, more preferably 0.9×10⁻² (parts by mass/min) or less, and even more preferably 0.85×10⁻² (parts by mass/min) or less, per 100 parts by mass of the urethane prepolymer.

The dropwise addition of the alkaline water may be carried out such that an amount of dropwise addition on a water basis (i.e., an amount of dropwise addition of the water per minute) is 0.6 (parts by mass/min) or greater and 5 (parts by mass/min) or less per 100 parts by mass of the urethane prepolymer; this is preferable in terms of readily adjusting the D50 and D90 of the polyurethane resin to be within the desired ranges. The amount of dropwise addition of the water present in the alkaline water is more preferably 0.7 (parts by mass/min) or greater, even more preferably 0.8 (parts by mass/min) or greater, and particularly preferably 0.9 (parts by mass/min) or greater, per 100 parts by mass of the urethane prepolymer. Furthermore, the amount of dropwise addition of the water present in the alkaline water is more preferably 4 (parts by mass/min) or less, even more preferably 3.5 (parts by mass/min) or less, and particularly preferably 3 (parts by mass/min) or less, per 100 parts by mass of the urethane prepolymer.

In the present specification, the total mass of the urethane prepolymer in the solution of the urethane prepolymer can be equated to a total amount of use of the component (A), the component (B), and the component (C) that are used in the production of the urethane prepolymer.

The total mass of the alkaline water and the water that are used for the emulsification and dispersion may be 100 to 900 parts by mass per 100 parts by mass of the urethane prepolymer; this is preferable in terms of enabling the particle size distribution of the polyurethane resin to readily fall within the desired ranges. The total mass is more preferably 110 to 800 parts by mass and even more preferably 120 to 700 parts by mass.

As described above, in the present invention, the D50 and the D90 of the polyurethane resin can be readily adjusted to be within the desired ranges, by adjusting the conditions for the emulsification and dispersion, particularly, by adjusting the alkaline water that is used for the emulsification and dispersion and the rate at which it is added.

Simultaneously with the emulsification and dispersion or after the emulsification and dispersion, chain extension may be performed by adding the component (D). In this case, an interfacial polymerization reaction that occurs between the isocyanate group in the emulsified micelle and the chain extender that is the component (D) results in the formation of a urea linkage, and, consequently, the crosslink density in the emulsified micelle is improved to form a three-dimensional crosslinked structure. Even in instances where the component (D) is not used, water molecules present in the system can cause chain extension as a result of the emulsification and dispersion of the urethane prepolymer in the water.

In the instance where the component (D) is used, it may be used in any amount, and, for example, the amount of use of the component (D) may be adjusted such that an equivalent ratio of 1:0.5 to 1:0.9 can be achieved, where the equivalent ratio is a ratio of the isocyanate groups in the urethane prepolymer to the component (D).

After the emulsification and dispersion, the used solvent and the like may be removed if necessary, and, accordingly, an aqueous dispersion of the polyurethane resin can be obtained.

Since the aqueous dispersion of the polyurethane resin prepared with the above-described method has a D50 of 0.01 µm or greater and 0.05 µm or less and a D90 of 0.10 µm or greater and 0.15 µm or less, the aqueous dispersion is suitable for the binder composition for an electrode of the present invention, as stated above.

### (Other Components Included in Binder Composition for Electrode)

The binder composition for an electrode of the present invention may include one or more other components, in addition to the aqueous dispersion of the polyurethane resin. The other components, for example and without limitation, may be similar to those of binder compositions for an electrode that are known in the art.

For example, the binder composition for an electrode of the present invention may include a carbon nanotube. The carbon nanotube may be of any type and may be, for example, similar to carbon nanotubes included in binder compositions for an electrode that are known in the art. Specific examples of the carbon nanotube include single-wall carbon nanotubes (SWCNT) and multi-wall carbon nanotubes (MWCNT). Single-wall carbon nanotubes are preferable because even a small amount of a single-wall carbon nanotube can increase electron conductivity.

The carbon nanotube may have any fiber diameter and any fiber length and, for example, preferably has a number average fiber diameter of 0.5 nm or greater and 20 nm or less and a number average fiber length of 0.5 µm or greater and 1 mm or less. When the number average fiber diameter is 0.5 nm or greater, an excessive increase in viscosity can be inhibited, which is likely to facilitate the preparation of a coating liquid composition for an electrode, which will be described below. When the number average fiber diameter is 20 nm or less, flexibility is improved, which is likely to improve the durability of a battery if it is produced. The number average fiber diameter is more preferably 1 nm or greater and 10 nm or less and even more preferably 2 nm or greater and 8 nm or less. Furthermore, when the number average fiber length is 0.5 µm or greater, the durability of a resulting electrode is likely to be improved, which is likely to improve the cycle life of a resulting battery. When the number average fiber length is 1 mm or less, the rheological control of the carbon nanotube is likely to be facilitated. The number average fiber length is more preferably 1 µm or greater and 10 µm or less and even more preferably 2 µm or greater and 7 µm or less. The number average fiber length and the number average fiber diameter can be determined, for example, as follows: 100 individual carbon nanotubes are randomly selected in a transmission electron micrograph or a scanning probe micrograph, their major axis length and diameter are measured, and number averages thereof are calculated.

In the instance where the binder composition for an electrode of the present invention includes a carbon nanotube, a content thereof is, for example and without limitation, preferably 0.1 to 10 parts by mass and more preferably 0.5 to 5 parts by mass, per 100 parts by mass of the urethane resin.

In the instance where the binder composition for an electrode of the present invention includes a carbon nanotube, the binder composition for an electrode of the present invention may include a dispersing agent A. In this case, the carbon nanotube is likely to exhibit improved dispersibility in the binder composition for an electrode.

Examples of the dispersing agent A include celluloses, such as hydroxymethyl cellulose, carboxymethyl cellulose, alkali metal salts thereof, methyl cellulose, ethyl cellulose, hydroxypropylmethyl cellulose, and hydroxyethylmethyl cellulose. In particular, carboxymethyl cellulose or a salt thereof is more preferable. In the instance where the binder composition for an electrode of the present invention includes carboxymethyl cellulose or a salt thereof, the carbon nanotube is likely to exhibit further improved dispersibility. Particularly preferably, the carboxymethyl cellulose or a salt thereof is a sodium salt of carboxymethyl cellulose.

In the instance where the binder composition for an electrode of the present invention includes the dispersing agent A, a content thereof is, for example and without limitation, preferably 0.1 to 10 parts by mass and more preferably 0.2 to 8 parts by mass, per 100 parts by mass of the urethane resin.

The binder composition for an electrode of the present invention may additionally include any of a variety of components, such as an antioxidant and a light stabilizer. The binder composition for an electrode of the present invention includes the aqueous dispersion of the polyurethane resin preferably in an amount of 60 mass% or greater, more preferably 80 mass% or greater, even more preferably 90 mass% or greater, and particularly preferably 95 mass% or greater.

The binder composition for an electrode of the present invention may be produced by any method. A method for producing the binder composition for an electrode of the present invention includes a step of preparing the aqueous dispersion of the polyurethane resin. That is, the method for producing the binder composition for an electrode of the present invention includes a step of preparing an aqueous dispersion of the polyurethane resin having a D50 volume average particle size of 0.01 µm or greater and 0.05 µm or less and a D90 volume average particle size of 0.10 µm or greater and 0.15 µm or less. The aqueous dispersion of the polyurethane resin can be prepared by the above-described method for producing an aqueous dispersion of a polyurethane resin.

In the instance where the binder composition for an electrode of the present invention includes a carbon nanotube and/or the dispersing agent A, the binder composition for an electrode can be prepared, for example, by mixing the aqueous dispersion of the polyurethane resin prepared as described above with the carbon nanotube and/or the dispersing agent A. The carbon nanotube and/or the dispersing agent A may be used in a state in which they are dispersed or dissolved in a dispersion medium, and in this instance, the dispersion medium may be, for example, similar to the dispersion medium for the aqueous dispersion of the polyurethane resin.

As stated above, the binder composition for an electrode of the present invention is suitable as a binder component (binding agent) of a coating liquid composition for an electrode that is used to produce an electrode for a power storage device. In particular, the binder composition for an electrode of the present invention can inhibit an increase in viscosity of the coating liquid and, even if the solids concentration of the coating liquid is increased, can make it unlikely that the viscosity increases. Accordingly, a coating liquid composition for an electrode including the binder composition for an electrode of the present invention enables the formation of an electrode having excellent performance.

### 2. Coating Liquid Composition for Electrode

A coating liquid composition for an electrode of the present invention includes the binder composition for an electrode, and other components that may be included therein are not particularly limited. For example, the coating liquid composition for an electrode of the present invention may further include one or more components that are included in coating liquid compositions for an electrode that are known in the art.

Specifically, the coating liquid composition for an electrode of the present invention may include an active material and a conductive additive in addition to the binder composition for an electrode and, if necessary, may further include a dispersing agent B and the like.

### (Active Material)

The active material may be a positive electrode active material or a negative electrode active material. In terms of improvement in dispersibility and of a low likelihood of an increase in viscosity even in a case in which the solids concentration is increased, it is preferable that the active material be a negative electrode active material.

The positive electrode active material may be any of a wide variety of positive electrode active materials known in the art. Examples thereof include various positive electrode active materials into and from which lithium ions can be intercalated and deintercalated. Specific examples include metal oxides, such as CuO, Cu₂O, MnO₂, MoO₃, V₂O₅, and CrO₃, composite oxides including lithium and a transition metal, such as LixCoO₂ and LixNiO₂, metal chalcogenides, and conductive polymeric compounds. In particular, composite oxides including lithium and at least one selected from transition metals, such as cobalt, nickel, and manganese, which are typically referred to as high-voltage positive electrode active materials, are preferable in terms of lithium ion deintercalation properties and a high likelihood of achieving a high voltage.

The negative electrode active material may be any of a wide variety of negative electrode active materials known in the art. Examples thereof include various negative electrode active materials into and from which lithium metal or lithium ions can be intercalated and deintercalated. Specific examples include carbon materials, such as natural graphite, artificial graphite, non-graphitizable carbon, and graphitizable carbon; metal materials, such as lithium metal, lithium alloys, and tin compounds; lithium transition-metal nitrides; crystalline metal oxides; amorphous metal oxides; silicon compounds; and conductive polymers. In particular, silicon compounds are more preferable, and SiO is even more preferable, in terms of a particularly low likelihood of an increase in viscosity even in a case in which the solids concentration is increased.

### (Conductive Additive)

The conductive additive may be any of a wide variety of electron-conductive materials that do not have a negative impact on the battery performance. Examples include carbon blacks, such as acetylene black and Ketjen black and also include conductive materials, such as natural graphites (scaly graphite, flake graphite, amorphous graphite, and the like), artificial graphites, carbon whiskers, carbon fibers, and metal (e.g., copper, nickel, aluminum, silver, or gold) powders, metal fibers, and conductive ceramic materials. In the instance where the binder composition for an electrode includes a carbon nanotube, the coating liquid composition for an electrode need not include any carbon nanotube. One conductive additive or two or more conductive additives may be included in the coating liquid composition for an electrode.

In the coating liquid composition for an electrode, a content ratio of the conductive additive may be similar to those of coating liquid compositions for an electrode that are known in the art; for example, the content ratio is preferably 0.1 to 30 mass% and more preferably 0.2 to 20 mass%, based on the mass of the active material.

### (Dispersing Agent B)

Examples of the dispersing agent B include, but are not limited to, a wide variety of dispersing agents included in coating liquid compositions for an electrode that are known in the art. Specific examples include celluloses, such as hydroxymethyl cellulose, carboxymethyl cellulose, alkali metal salts thereof, methyl cellulose, ethyl cellulose, hydroxypropylmethyl cellulose, and hydroxyethylmethyl cellulose; cellulose nanofibers, such as chemically modified cellulose nanofibers; polycarboxylic acid-based compounds, such as polyacrylic acids and sodium polyacrylates; compounds having a vinyl pyrrolidone structure, such as polyvinylpyrrolidone; and polymeric compounds, such as polyester resins, polyacrylamides, polyethylene oxides, polyvinyl alcohols, sodium alginates, xanthan gums, carrageenans, guar gums, agars, and starches. In particular, the dispersing agent B is preferably a cellulose and particularly preferably a salt of carboxymethyl cellulose. In the instance where the binder composition for an electrode includes a dispersing agent A, the coating liquid composition for an electrode need not include any dispersing agent B or may include a dispersing agent B of a type that is different from the dispersing agent A. One dispersing agent B or two or more dispersing agents B may be included in the coating liquid composition for an electrode.

In the coating liquid composition for an electrode, the content ratio of the dispersing agent B (excluding the polyurethane resin in the aqueous dispersion of the polyurethane resin) may be similar to those of coating liquid compositions for an electrode that are known in the art. For example, the content ratio may be 0.01 mass% or greater and is preferably 0.05 mass% or greater, more preferably 0.1 mass% or greater, even more preferably 0.2 mass% or greater, and particularly preferably 0.3 mass% or greater, and the content ratio may be 5 mass% or less and is preferably 3 mass% or less, more preferably 2.5 mass% or less, even more preferably 2 mass% or less, and particularly preferably 1.5 mass% or less. The content ratio is based on the mass of the solids in the coating liquid composition for an electrode.

### (Other Components)

The coating liquid composition for an electrode may further include a surfactant. Examples of the surfactant include a wide variety of surfactants included in coating liquid compositions for an electrode that are known in the art. The surfactant may be a nonionic surfactant, an anionic surfactant, or a cationic surfactant.

Examples of the nonionic surfactant include acetylene glycol-based nonionic surfactants. Examples of the acetylene glycol-based nonionic surfactants include Surfynol 420, Surfynol 423, Surfynol 424, Surfynol 425, Surfynol 440, and Surfynol 465, manufactured by Nissin Chemical Industry Co., Ltd.; Triton (Registered trademark) HW-1000, manufactured by The Dow Chemical Company; Olfine AF-103 and Olfine AF-300, manufactured by Nissin Chemical Industry Co., Ltd.; and Antifoam 013A, manufactured by Kao Corporation. The nonionic surfactant may be a fluorine-based surfactant or a silicon-based surfactant.

In the coating liquid composition for an electrode, the content ratio of the surfactant may be similar to those of coating liquid compositions for an electrode that are known in the art. For example, the content ratio may be 0.001 mass% or greater and is preferably 0.005 mass% or greater, more preferably 0.01 mass% or greater, even more preferably 0.02 mass% or greater, and particularly preferably 0.03 mass% or greater, and the content ratio may be 3 mass% or less and is preferably 2 mass% or less, more preferably 1 mass% or less, even more preferably 0.5 mass% or less, and particularly preferably 0.1 mass% or less. The content ratio is based on the mass of the solids in the coating liquid composition for an electrode.

The coating liquid composition for an electrode may further include one or more of various additives, if necessary. Examples of the additives include weathering agents, antimicrobial agents, antifungal agents, pigments, corrosion inhibitors, dyes, coalescing agents, silane coupling agents, anti-blocking agents, viscosity modifiers, leveling agents, defoaming agents, dispersion stabilizers, light stabilizers, antioxidants, UV absorbers, inorganic fillers, organic fillers, plasticizers, lubricants, and antistatic agents.

### (Coating Liquid Composition for Electrode)

The coating liquid composition for an electrode contains the polyurethane resin derived from the binder composition for an electrode. The content ratio of the polyurethane resin may be 0.5 mass% or greater based on the mass of the active material; such a content ratio may be selected in view of a low likelihood of an increase in viscosity of the coating liquid composition for an electrode. The content ratio is preferably 1 mass% or greater, more preferably 3 mass% or greater, even more preferably 5 mass% or greater, and particularly preferably 7 mass% or greater. The content ratio of the polyurethane resin may be 30 mass% or less based on the mass of the active material; such a content ratio may be selected in view of a low likelihood of an increase in viscosity of the coating liquid composition for an electrode. The content ratio is preferably 25 mass% or less, more preferably 20 mass% or less, even more preferably 15 mass% or less, and particularly preferably 13 mass% or less.

The coating liquid composition for an electrode includes a solvent, which may be, for example and without limitation, the same as or different from the solvent included in the aqueous dispersion of the polyurethane resin.

The coating liquid composition for an electrode may have any solids concentration. With higher levels of the solids concentration, higher amounts of an active material and the like can be included, which can result in enhancement of the binding effect and improvement in electrode performance. From this standpoint, it is preferable that the solids concentration of the coating liquid composition for an electrode be 40 mass% or greater. The solids concentration is more preferably 43 mass% or greater, even more preferably 45 mass% or greater, and particularly preferably 48 mass% or greater. The solids concentration of the coating liquid composition for an electrode may be 50 mass% or greater. In terms of a low likelihood of the occurrence of aggregation and a high likelihood of achieving excellent coating properties, it is preferable that the solids concentration of the coating liquid composition for an electrode be 60 mass% or less. The solids concentration is more preferably 55 mass% or less and even more preferably 53 mass% or less.

The coating liquid composition for an electrode of the present invention may have a viscosity at a solids concentration of 50 mass% of 1000 to 25000 mPa·s, which is preferable in terms of a low likelihood of aggregation and in terms of providing excellent coating properties. The viscosity is more preferably 2000 to 23000 mPa·s, even more preferably 3000 to 20000 mPa·s, and particularly preferably 3000 to 18000 mPa·s. The viscosity of the coating liquid composition for an electrode of the present invention is a value measured by a B-type rotational viscometer (25°C, 6 rpm).

The coating liquid composition for an electrode of the present invention may be prepared by any method. For example, the method may be similar to methods for preparing a coating liquid composition for an electrode that are known in the art. For example, the coating liquid composition for an electrode can be prepared by mixing an active material, a conductive additive, a dispersing agent, and the binder composition for an electrode together in predetermined content ratios. The mixing can be carried out, for example, with a homodisper, a planetary mixer, a propeller mixer, a kneader, a homogenizer, an ultrasonic homogenizer, a colloid mill, a bead mill, a sand mill, a high-pressure homogenizer, or the like.

An electrode for a power storage device can be formed with the coating liquid composition for an electrode of the present invention. For example, the electrode can be formed by coating the coating liquid composition for an electrode onto a current collector, thereby forming a coating film. Accordingly, the electrode for a power storage device contains the solids of the coating liquid composition for an electrode. Since the coating liquid composition for an electrode can have a higher solids concentration than coating liquid compositions for an electrode of the related art, the function of the binder is sufficiently provided, and an electrode having excellent properties can be readily formed.

The coating of the coating liquid composition for an electrode of the present invention onto a current collector may be performed by any method. For example, the method may be any of a wide variety of coating methods known in the art.

The current collector onto which the coating liquid composition for an electrode of the present invention is to be coated may be of any type. For example, the current collector may be any of a wide variety of positive electrode current collectors and negative electrode current collectors that are used in lithium secondary batteries. Examples of the positive electrode current collectors include aluminum, titanium, stainless steel, nickel, baked carbon, conductive polymers, and conductive glass. Examples of the negative electrode current collectors include copper, stainless steel, nickel, aluminum, titanium, baked carbon, conductive polymers, conductive glass, and Al-Cd alloys.

The electrode for a power storage device prepared with the coating liquid composition for an electrode of the present invention can be used in any of a variety of power storage devices. The power storage device can have excellent properties as a result of the inclusion of the electrode for a power storage device prepared with the coating liquid composition for an electrode of the present invention. The power storage device may be a power storage device known in the art, examples of which include lithium secondary batteries and lithium ion capacitors.

The power storage device may have any configuration. For example, the configuration may be similar to those of power storage devices known in the art, provided that the electrode for a power storage device prepared with the coating liquid composition for an electrode of the present invention is included.

The power storage device (e.g., a lithium secondary battery) may be formed to have a cylindrical shape, a coin shape, a prismatic shape, or any other shape. The battery has the same basic configuration regardless of its shape and can be embodied with design modifications, depending on the purpose.

To define the invention encompassed by the present disclosure, the constituents (e.g., properties, structures, and functions) described in the embodiments of the present disclosure may be combined in any manner. That is, the present disclosure encompasses all the features provided by various combinations of the constituents that are described in the present specification and can be combined with one another.

### EXAMPLES

Now, the present invention will be described in more detail with reference to Examples. The present invention is not limited to the embodiments of the Examples.

### (Production Example 1: Aqueous Dispersion A1 of Polyurethane Resin)

71.3 parts by mass of a polybutadiene polyol (Poly bd R-45HT, average hydroxy number: 46.5 mgKOH/g, manufactured by Idemitsu Kosan Co., Ltd.), 4.2 parts by mass of dimethylolpropionic acid, 24.5 parts by mass of dicyclohexylmethane diisocyanate, and 100 parts by mass of methyl ethyl ketone were added to a four-neck flask equipped with a stirrer, a reflux condenser, a thermometer, and a nitrogen inlet tube. Subsequently, the reactants were allowed to react at 75°C for 4 hours to afford a solution of a polyurethane prepolymer in methyl ethyl ketone. The content of free isocyanate groups based on the amount of the non-volatile portion of the methyl ethyl ketone solution was 2.5%. Next, the solution was cooled to 45°C and subsequently emulsified and dispersed as follows. The methyl ethyl ketone solution was emulsified and dispersed with a homogenizer while 186 parts by mass of water was added thereto. The water contained 1.25 parts by mass of sodium hydroxide dissolved therein and was added at a rate of 1 part by mass/min (0.67×10⁻² parts by mass/min on an alkaline component basis). The resultant was further emulsified and dispersed with addition of 114 parts by mass of water. An aqueous solution in which 1.6 parts by mass of ethylene diamine had been dissolved in 24 parts by mass of water was added to the resulting emulsified dispersion, which was then allowed to undergo a chain extension reaction for 1 hour. Subsequently, the methyl ethyl ketone, which was the reaction solvent, was removed under reduced pressure at 50°C to afford an aqueous dispersion A1 of a polyurethane resin, which had a solids concentration of 30 mass%.

### (Production Example 2: Aqueous Dispersion A2 of Polyurethane Resin)

An aqueous dispersion A2 of a polyurethane resin, which had a solids concentration of 30 mass%, was prepared in a manner similar to that of Production Example 1, except for the following difference. The methyl ethyl ketone solution was emulsified and dispersed with a homogenizer while 150 parts by mass of water was added thereto; the water contained 1.25 parts by mass of sodium hydroxide dissolved therein and was added at a rate of 1 part by mass/min (0.83×10⁻² parts by mass/min on an alkaline component basis); and the resultant was further emulsified and dispersed with addition of 150 parts by mass of water.

### (Production Example 3: Aqueous Dispersion A3 of Polyurethane Resin)

An aqueous dispersion A3 of a polyurethane resin, which had a solids concentration of 30 mass%, was prepared in a manner similar to that of Production Example 1, except for the following difference. The methyl ethyl ketone solution was emulsified and dispersed with a homogenizer while 450 parts by mass of water was added thereto; the water contained 1.25 parts by mass of sodium hydroxide dissolved therein and was added at a rate of 3 parts by mass/min (0.83×10⁻² parts by mass/min on an alkaline component basis; and the resultant was further emulsified and dispersed with addition of 150 parts by mass of water.

### (Production Example 4: Aqueous Dispersion A4 of Polyurethane Resin)

An aqueous dispersion A4 of a polyurethane resin, which had a solids concentration of 30 mass%, was prepared in a manner similar to that of Production Example 1, except that the polybutadiene polyol was replaced with a hydrogenated polybutadiene polyol (Nisso-PB GI-2000, manufactured by Nippon Soda Co., Ltd.).

### (Production Example 5: Aqueous Dispersion A5 of Polyurethane Resin)

An aqueous dispersion A5 of a polyurethane resin, which had a solids concentration of 30 mass%, was prepared in a manner similar to that of Production Example 1, except for the following difference. The methyl ethyl ketone solution was emulsified and dispersed with a homogenizer while 300 parts by mass of water was added thereto; and the water contained 1.25 parts by mass of sodium hydroxide dissolved therein and was added at a rate of 6 parts by mass/min (2.4x10⁻² parts by mass/min on an alkaline component basis).

### (Production Example 6: Aqueous Dispersion A6 of Polyurethane Resin)

To prepare an aqueous dispersion of a polyurethane resin having a 50% cumulative particle size of less than 0.01 µm and a 90% cumulative particle size of 0.1 to 0.15 µm, an operation was performed in a manner similar to that of Production Example 1, except for the following difference. The methyl ethyl ketone solution was emulsified and dispersed with a homogenizer while 122 parts by mass of water was added thereto; the water contained 1.25 parts by mass of sodium hydroxide dissolved therein and was added at a rate of 1 part by mass/min (1.02×10⁻² parts by mass/min on an alkaline component basis); and the resultant was further emulsified and dispersed with addition of 178 parts by mass of water. However, it was impossible to obtain an aqueous dispersion A6 of a polyurethane resin having a 50% cumulative particle size of less than 0.01 µm.

### (Production Example 7: Aqueous Dispersion A7 of Polyurethane Resin)

To prepare an aqueous dispersion of a polyurethane resin having a 50% cumulative particle size of greater than 0.05 µm and a 90% cumulative particle size of 0.1 to 0.15 µm, an operation was performed in a manner similar to that of Production Example 1, except for the following difference. The methyl ethyl ketone solution was emulsified and dispersed with a homogenizer while 233 parts by mass of water was added thereto; the water contained 1.25 parts by mass of sodium hydroxide dissolved therein and was added at a rate of 1 part by mass/min (0.54×10⁻² parts by mass/min on an alkaline component basis); and the resultant was further emulsified and dispersed with addition of 67 parts by mass of water. However, it was impossible to obtain an aqueous dispersion A7 of a polyurethane resin having a 50% cumulative particle size of greater than 0.05 µm.

### (Production Example 8: Aqueous Dispersion A8 of Polyurethane Resin)

An aqueous dispersion A8 of a polyurethane resin, which had a solids concentration of 30 mass%, was prepared in a manner similar to that of Production Example 1, except for the following difference. The methyl ethyl ketone solution was emulsified and dispersed with a homogenizer while 150 parts by mass of water was added thereto; the water contained 1.25 parts by mass of sodium hydroxide dissolved therein and was added at a rate of 0.5 parts by mass/min (0.42×10⁻² parts by mass/min on an alkaline component basis); and the resultant was further emulsified and dispersed with addition of 150 parts by mass of water.

### (Production Example 9: Aqueous Dispersion A9 of Polyurethane Resin)

An aqueous dispersion A9 of a polyurethane resin, which had a solids concentration of 30 mass%, was prepared in a manner similar to that of Production Example 1, except for the following difference. The methyl ethyl ketone solution was emulsified and dispersed with a homogenizer while 150 parts by mass of water was added thereto; the water contained 1.25 parts by mass of sodium hydroxide dissolved therein and was added at a rate of 6 parts by mass/min (5.0×10⁻² parts by mass/min on an alkaline component basis); and the resultant was further emulsified and dispersed with addition of 150 parts by mass of water.

**[Table 1]**

| Production Example | Aqueous Dispersion of Pol yurethane Resin | D50 | D90 |
|---|---|---|---|
| Production Example 1 | A1 | 0.05 | 0.11 |
| Production Example 2 | A2 | 0.02 | 0.10 |
| Production Example 3 | A3 | 0.05 | 0.15 |
| Production Example 4 | A4 | 0.05 | 0.12 |
| Production Example 5 | A5 | 0.21 | 0.3 |
| Production Example 6 | A6 | Synthesis was not successful | |
| Production Example 7 | A7 | Synthesis was not successful | |
| Production Example 8 | A8 | 0.03 | 0.06 |
| Production Example 9 | A9 | 0.04 | 0.18 |

Table 1 shows the results of measuring the D50 and the D90 of the aqueous dispersion of a polyurethane resin prepared in each of the production examples. The aqueous dispersions (A1, A2, A3, and A4) of a polyurethane resin prepared in Production Examples 1 to 4 had a D50 of 0.01 µm or greater and 0.05 µm or less and a D90 of 0.10 µm or greater and 0.15 µm or less.

### (Example 1)

8.5 parts by mass of an aqueous dispersion of acetylene black (solids concentration: 25 mass%) was mixed with 42.9 parts by mass of an aqueous dispersion of a SWCNT (solids concentration: 1.0 mass%), and the mixture was stirred for 1 hour. To this, 48.6 parts by mass of the aqueous dispersion A1 of a polyurethane resin (solids concentration: 30 mass%) prepared in Production Example 1 was added and stirred for 30 minutes to afford a liquid mixture. The liquid mixture and 77.4 parts by mass of an aqueous solution of carboxymethyl cellulose (solids concentration: 1.0 mass%) were stirred with a homodisper for 10 minutes, and subsequently, 153.2 parts by mass of an active material (SiO) was added and stirred with a homodisper for 10 minutes. Lastly, while stirring was performed, 11.6 parts by mass of water was added, and the solids concentration were prepared, to afford a coating liquid composition for an electrode having a solids concentration of 50 mass%.

### (Example 2)

A coating liquid composition for an electrode having a solids concentration of 50 mass% was prepared in a manner similar to that of Example 1, except that the aqueous dispersion A1 of a polyurethane resin was replaced with the aqueous dispersion A2 of a polyurethane resin (solids concentration: 30 mass%) prepared in Production Example 2.

### (Example 3)

A coating liquid composition for an electrode having a solids concentration of 50 mass% was prepared in a manner similar to that of Example 1, except that the aqueous dispersion A1 of a polyurethane resin was replaced with the aqueous dispersion A3 of a polyurethane resin (solids concentration: 30 mass%) prepared in Production Example 3.

### (Example 4)

A coating liquid composition for an electrode having a solids concentration of 50 mass% was prepared in a manner similar to that of Example 1, except that the aqueous dispersion A1 of a polyurethane resin was replaced with the aqueous dispersion A4 of a polyurethane resin (solids concentration: 30 mass%) prepared in Production Example 4.

### (Comparative Example 1)

A coating liquid composition for an electrode having a solids concentration of 50 mass% was prepared in a manner similar to that of Example 1, except that the aqueous dispersion A1 of a polyurethane resin was replaced with the aqueous dispersion A5 of a polyurethane resin (solids concentration: 30 mass%) prepared in Production Example 5.

### (Comparative Example 4)

A coating liquid composition for an electrode having a solids concentration of 50 mass% was prepared in a manner similar to that of Example 1, except that the aqueous dispersion A1 of a polyurethane resin was replaced with the aqueous dispersion A8 of a polyurethane resin (solids concentration: 30 mass%) prepared in Production Example 8.

### (Comparative Example 5)

A coating liquid composition for an electrode having a solids concentration of 50 mass% was prepared in a manner similar to that of Example 1, except that the aqueous dispersion A1 of a polyurethane resin was replaced with the aqueous dispersion A9 of a polyurethane resin (solids concentration: 30 mass%) prepared in Production Example 9.

**[Table 2]**

| Example | Aqueous Dispersion of Polyurethane Resin | Viscosity (mPa·s) at Various Solids Concentration | | | | |
|---|---|---|---|---|---|---|
| | | Solids 50 mass% | Solids 48 mass% | Solids 46 mass% | Solids 44 mass% | Solids 42 mass% |
| Example 1 | A1 | 15700 | 12800 | 7200 | 3400 | - |
| Example 2 | A2 | 20500 | 11900 | 5100 | 4600 | - |
| Example 3 | A3 | 17700 | 10300 | 6900 | 4400 | - |
| Example 4 | A4 | 15600 | 12000 | 9000 | 5600 | - |
| Comparative Example 1 | A5 | 32000 | 23000 | 15400 | 9000 | 6200 |
| Comparative Example 2 | A6 | - | - | - | - | - |
| Comparative Example 3 | A7 | - | - | - | - | - |
| Comparative Example 4 | A8 | 27300 | 17400 | 11100 | 7800 | 5400 |
| Comparative Example 5 | A9 | 29200 | 19000 | 11700 | 8000 | 6700 |

Table 2 shows the viscosity at each solids content concentration of the coating liquid composition for an electrode prepared in each of the Examples and Comparative Examples. As indicated by the results shown in Table 2, an increase in viscosity was inhibited in the coating liquid compositions for an electrode prepared in the Examples, and, in particular, even when they had a solids concentration of 50 mass%, their viscosities were at a level comparable to those in low solids concentration regions of the coating liquid compositions for an electrode of the Comparative Examples. That is, the coating liquid composition for an electrode prepared in each of the Examples was one in which an increase in viscosity of the coating liquid for forming an electrode was inhibited and which was unlikely to experience increases in viscosity even if the solids concentration of the coating liquid was increased. Accordingly, it was demonstrated that the binder composition for an electrode of the present invention is suitable for the preparation of a coating liquid having a high solids concentration and is, therefore, suitable as a binder component (binding agent) of a coating liquid composition for an electrode that is used to produce an electrode for a power storage device.

## Claims

1. A binder composition for an electrode, the binder composition comprising an aqueous dispersion of a polyurethane resin, wherein
the polyurethane resin has a D50 volume average particle size of 0.01 µm or greater and 0.05 µm or less and a D90 volume average particle size of 0.10 µm or greater and 0.15 µm or less.

2. The binder composition for an electrode according to Claim 1, further comprising a carbon nanotube.

3. The binder composition for an electrode according to Claim 2, further comprising carboxymethyl cellulose or a salt thereof.

4. A coating liquid composition for an electrode, the coating liquid composition comprising the binder composition for an electrode according to any one of Claims 1 to 3.

5. An electrode for a power storage device, the electrode comprising solids of the coating liquid composition for an electrode according to Claim 4.

6. A power storage device comprising the electrode for a power storage device according to Claim 5.

7. A method for producing a binder composition for an electrode, the binder composition comprising an aqueous dispersion of a polyurethane resin, the method comprising a step of preparing an aqueous dispersion of a polyurethane resin having a D50 volume average particle size of 0.01 µm or greater and 0.05 µm or less and a D90 volume average particle size of 0.10 µm or greater and 0.15 µm or less.
